# EUROPEAN PATENT SPECIFICATION

(11) **EP 3 063 920 B1**
(45) Date of publication and mention of the grant of the patent: **14.12.2022**
(21) Application number: 14799048.5
(22) Date of filing: 31.10.2014
(51) Int. Cl.: H04L 9/40

(54) **METHOD FOR SETTING UP, VIA AN INTERMEDIATE ENTITY, A SECURE SESSION BETWEEN A FIRST AND A SECOND ENTITY, AND CORRESPONDING ENTITIES AND COMPUTER PROGRAM PRODUCTS**
VERFAHREN ZUM AUFBAU EINER SITZUNG ZWISCHEN ZWEI VORRICHTUNGEN, ÜBER EIN ZWISCHENGESCHAL-
TETES KNOTENPUNKT UND VORRICHTUNGEN UND KOMPUTERPROGRAMMPRODUKTE ZUR DURCHFÜHRUNG DES VERFAHRENS
MÉTHODES D'ÉTABLISSEMENT D'UNE SESSION ENTRE DEUX DISPOSITIFS, VIA UN NOEUD INTERMÉDIAIRE, ET DISPOSITIFS ET PRODUIT DE PROGRAMME D'ORDINATEUR POUR LEUR MISE EN OEUVRE

(30) Priority: 31.10.2013 NL 2011717
(43) Date of publication of application: 07.09.2016
(73) Proprietor: Ubiqu B.V., 3054 EM Rotterdam (NL)
(72) Inventor: GORANOV, Boris Petrov Dokov, NL-3054 EM Rotterdam (NL)
(74) Representative: V.O.
(86) International application number: PCT/NL2014/050755
(87) International publication number: WO 2015/065189

(56) References cited:
- US-A1- 2005 149 732
- US-A1- 2009 191 961
- US-A1- 2011 296 186

## Description

For the purpose of secure exchange of information on the Internet, e.g. for enabling reliable access to data, safe information storage, processing and distribution, a secure session between entities on the Internet is indispensable. As an example, a safe session has to be established, and optionally maintained, between a server on which an application is running and a user workplace, such as a PC or tablet.

The claimed invention relates to a method, a platform application, a user authentication device, an intermediate node and a computer program product as defined in independent claims 1, 6, 8, 9 and 11, respectively. Particular embodiments are defined in the dependent claims.

It is noted that patent publication US 2011/296186 discloses a system and method for providing authenticated access to an initiating terminal in relation to services provided by a terminating terminal via a communications network. It is further noted that patent publication US 2005/149732 discloses authenticating devices and establishing secure connections between devices using static Diffie-Hellman key pairs. It is also noted that patent publication US 2009/0191961 discloses an electronic gaming machine that is protected against invalid use.

A computer program product may comprise a set of computer executable instructions stored on a data carrier, such as a CD or a DVD. The set of computer executable instructions, which allow a programmable computer to carry out the methods as defined above, may also be available for downloading from a remote server, for example via the Internet or via an app.

Other advantageous embodiments according to the invention are described in the following claims.

By way of example only, embodiments of the present invention will now be described with reference to the accompanying figures in which
Fig. 1 shows a network comprising a first entity according to the invention, a second entity according to the invention and an intermediate node according to the invention;
Fig. 2 shows a first process diagram according to the invention;
Fig. 3 shows a second process diagram according to the invention;
Fig. 4 shows a third process diagram according to the invention;
Fig. 5 shows a fourth process diagram according to the invention;
Fig. 6 shows a flow chart of a method according to the invention being performed on the first entity shown in Fig. 1;
Fig. 7 shows a flow chart of a method according to the invention being performed on the second entity shown in Fig. 1; and
Fig. 8 shows a flow chart of a method according to the invention being performed on the intermediate node shown in Fig. 1.

It is noted that the figures show merely a preferred embodiment according to the invention. In the figures, the same reference numbers refer to equal or corresponding parts.

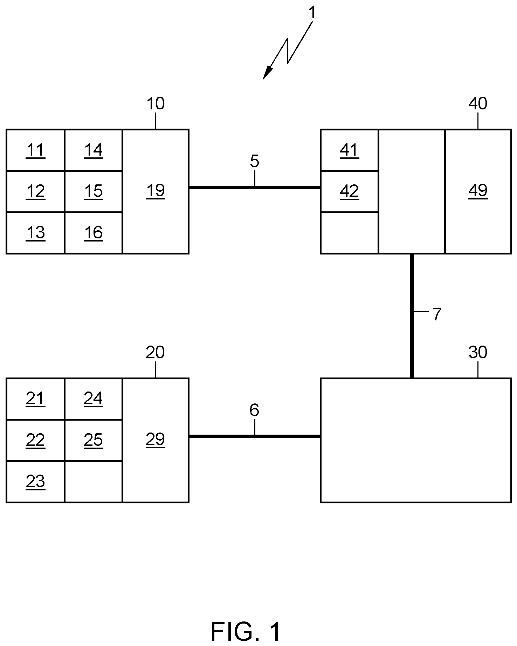

Figure 1 shows a network 1 comprising a first entity 10 according to the invention, a second entity 20 according to the invention and an intermediate node 40 according to the invention. In the shown embodiment the first entity 10 is a user workplace application, such as a PC, a tablet, a cash desk or another application that is running on a hardware device operated by a user. Further, in the shown embodiment, the second entity 20 is a user authentication device, such as a cellular phone, a PDA, a smart card, a token, an electronic key or another personal device serving for authentication purposes. The network 1 also comprises an authentication server 30 associated with the second entity 20. Further, the network 1 comprises a first data transmission path 5 connecting the user workplace application 10 to the intermediate node 40, a second data transmission path 6 connecting the second entity 20 to the authentication server 30, and a third data transmission path 7 connecting the intermediate node 40 to the authentication server 30.

The first entity 10 is provided with a number of modules for setting up a secure session with a second entity 20 as described below. Thereto the first entity 10 includes a first random generator 11 for generating a first random number, an I/O interface 12 for exporting a first string derived from said first random number, to a user for entering the first string into a second entity 20, a processor 13 for applying a one-way function to the first string or to a derivative thereof, obtaining an encoded string, and a transmitting unit 14 for transmitting the encoded string to the intermediate node 40 that is in connection to the first entity 10 and the second entity 20. Further, the first entity 10 includes a receiver unit 15 for receiving from the second entity 20 a second string being derived from a second random number generated by the second entity 20. The processor 13 is further arranged for deriving a secret key from the first and the second string. Optionally, the first entity 10 is provided with a second random generator 16 for generating a second random number as described below.

Also the second entity 20 is provided with a number of modules for facilitating a procedure of setting up a secure session with the first entity 10. Thereto, the second entity 20 includes an I/O interface 21 for receiving a first string derived from a first random number generated by a first entity 10, a processor 22 for applying a one-way function to the first string or to a derivative thereof, obtaining an encoded string, a transmitting unit 23 for transmitting the encoded string to an intermediate node that is in connection to a first and the second entity. Further, the second entity 20 includes a second random generator 24 for generating a second random number. The processor 22 is arranged for deriving a second string from said second random number and for transmitting the second string to the first entity 10 if a verifying step of comparing encoded strings transmitted by the first entity 10 and the second entity 20 has a positive result. The processor 22 is further arranged for deriving a secret key from the first and the second string. In addition, the second entity 20 is provided with a receiver unit 25.

The intermediate node 40 that is in connection to a first and second entity for setting up a secure connection between the first and the second entity 10, 20 comprises a receiving unit 41 for receiving an encoded string from the first and the second entity 10, 20, and a processor 42 for verifying whether the encoded strings received from the first and second entity 10, 20 match to each other. If the encoded strings correspond to each other, a secure session can be set up. The processor 42 is further arranged for authorizing the first and second entity 10, 20 to share a second string being derived from the second random number generated by the second entity 20, if the verifying step has a positive result.

The first entity 10, the second entity 20 and the intermediate node 40 are each provided with a processing unit 19, 29, 49 for controlling operation of the respective entity or node in the network 1.

It is noted that in another embodiment of the invention, the first entity 10 is the user authentication device while the second entity 20 is the platform application. Then, the first entity 10 not only generates the first random number, but also the second random number. The second random number is forwarded as a second string to the second entity 20, either via manually entering the second string into the I/O interface 21 of the second entity 20 or via transmittal of a digital path, preferably in encrypted format. Also in this embodiment, the secure session is set up between a user authentication device and a platform application via a first data transmission path 5, a second data transmission path 6 and a third data transmission path 7. The platform application of the secure session can e.g. be chosen to be a user workplace application, a cloud application, an authentication provider application, or a transaction system application.

The first string derived from the first random number, generated by the first entity 10, can be implemented as a random message produced from said first random number. The first string can also be produced as another representation of the first random number. Alternatively, the first string and the first random number are identical.

Further, the derivative of the first string can be generated by applying a hash function or a similar function to the string. Otherwise, the derivative of the first string is identical to the string itself. A one-way function is applied to the derivative of the first string to obtain an encrypted string.

The second string can be transmitted in an encrypted manner. Alternatively, the second string is exported to a user, e.g. via a display for entering the string in the first or second entity 10, 20.

In the above described embodiment, the intermediate node 40 can be a server on which a specific application is running, e.g. a document management application for managing storage, processing and/or distribution of documents in the cloud. Alternatively, the intermediate node 40 is the authentication provider that is securely connected to the authentication device.

When the secure session between the first and second entity 10, 20 has been established, a secure transmission channel can be used for one-way or two-way data transfer, such as a transfer of a message, a decryption and/or encryption key, or an authorization dialog. Decryption and/or encryption keys can be used to authorize a document in a cloud application.

If the platform application is a transaction system application, a user workplace application is generally remotely connected thereto. Then, a transaction process may be started, including the steps of preparing a persistent transaction instruction on the user workplace application, performing an authorization dialog between the transaction system application and the authentication device, and executing the transaction instruction only when the authorization dialog has successfully finished. The authorization dialog may include the steps of transmitting a code, from the transaction system application to the authentication device for entering the code into the user workplace application, transmitting the code from the user workplace application to the transaction system application, optionally in encrypted format, and verifying whether the code or the encrypted equivalent thereof received by the transaction system application is the same as the code transmitted by said transaction system application, or the encrypted equivalent thereof.

In a specific embodiment according to the invention, the step of transmitting the second string is implemented by exporting the second string to a user, via an I/O interface of one entity 10; 20 for manually entering the second string into an I/O interface of the other entity 20; 10, respectively.

The user authentication device is associated with the authentication server 30 as a result of an identification process that has been performed prior to setting up a secure connection between the first entity 10 and the second entity 20. Then, a secure connection is present between the user authentication device and the associated authentication server 30, so that a user of the authentication device can perform an identity or capacity process in a particular context, e.g. to have access to a safety box.

Advantageously, authentication data can be made available to the intermediate node 40, e.g. in the form of metadata, in order to inform the intermediate node 40 about an identity or capacity of the user authentication device transmitting the encoded string to the intermediate node 40.

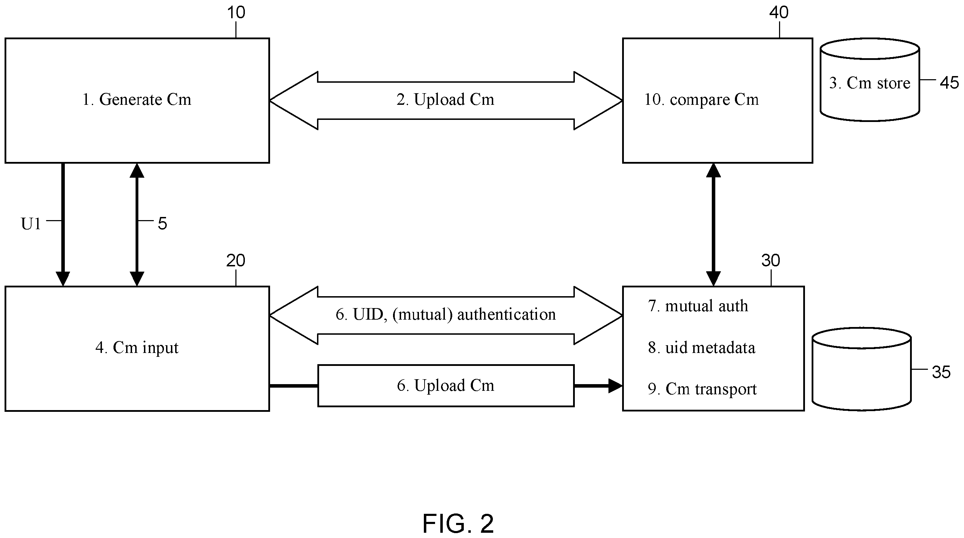

Fig. 2 shows a first process diagram according to the invention. Here, the first random number is generated by the first entity 10, a user platform application, uploaded as an encoded string Cₘ to the intermediate node 40 and stored in an intermediate memory unit 45 associated with the intermediate node 40. The first random number or first string is exported to the user, e.g. via a display, and entered by the user in a first manual user action Ui into the second entity 20, a user authentication device. Then, the second entity 20 forwards the encoded string Cₘ and user identification data UID to the authentication server 30 for mutual identification, including retrieval of information from identification metadata stored in an authentication storage unit 35 associated with the authentication server 30, and transport of relevant identification metadata and the first encoded string to the intermediate node 40. Then, the intermediate node 40 performs a verification of the encoded strings received from the first and the second entity 10, 20. If the strings correspond, the intermediate node 40 authorizes the first and second entity 10, 20 to share a second random number for computing a unique key. A secure connection S is set up between the user workplace application and the user authentication device.

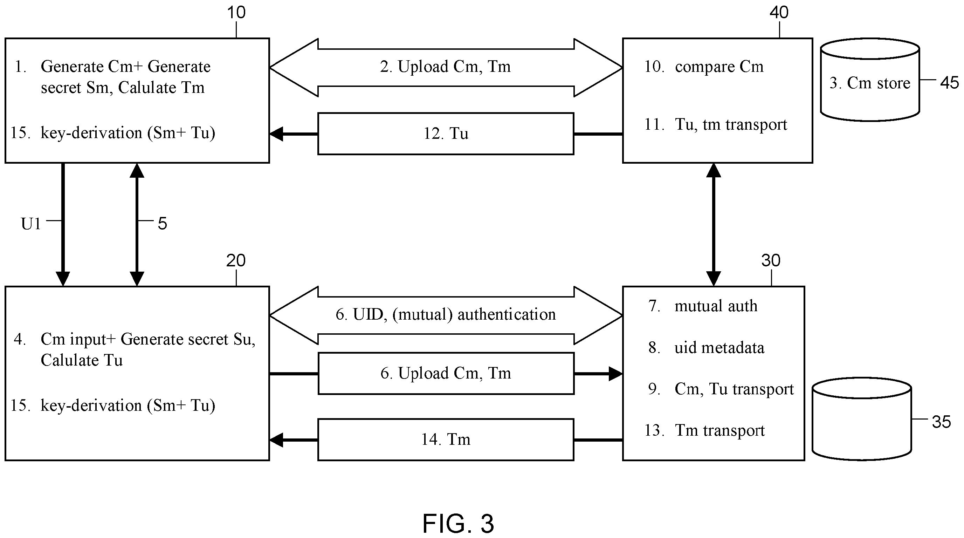

Fig. 3 shows a second process diagram according to the invention. Again, the first entity 10, a user workplace application, generates the first random number, and uploads the number as an encoded string Cₘ to the intermediate node 40 for storage in the intermediate memory unit 45. Similar to the process shown in Fig. 2, the first random number or first string is exported to the user, e.g. via a display, and entered by the user in a first manual user action Ui into the second entity 20, the user authentication device. Here, both the first entity 10 and the second entity 20 derive a secret key Sm, Su and apply the key Sm, Su to the number Cₘ, or equivalent thereof, obtaining the encoded string Tₘ, Tᵤ, encrypted transformations of the random number Cₘ or the equivalent of Cₘ. As an example, a diffie-hellmann key exchange can be applied. The encrypted transformations Tₘ, Tᵤ, are uploaded to the intermediate node 40 and the authentication server 30, respectively. Also, user identification data UID from the second entity 20 is forwarded to the authentication server 30 for mutual identification, including retrieval of information from identification metadata stored in an authentication storage unit 35 associated with the authentication server 30, and transport of relevant identification metadata, the first encoded string Cₘ and the encrypted transformation Tᵤ, to the intermediate node 40. The intermediate node 40 performs a verification of the encoded strings Cₘ received from the first and the second entity 10, 20. If the strings correspond, the intermediate node 40 authorizes the first and second entity 10, 20 to share a second random number. The encoded strings Tₘ, Tᵤ, are uploaded to the second and first entity 20, 10, respectively. Then, both the first and the second entity 10, 20 compute a key based on the encoded strings Tₘ, Tᵤ. A secure connection S is set up between the user workplace application and the user authentication device.

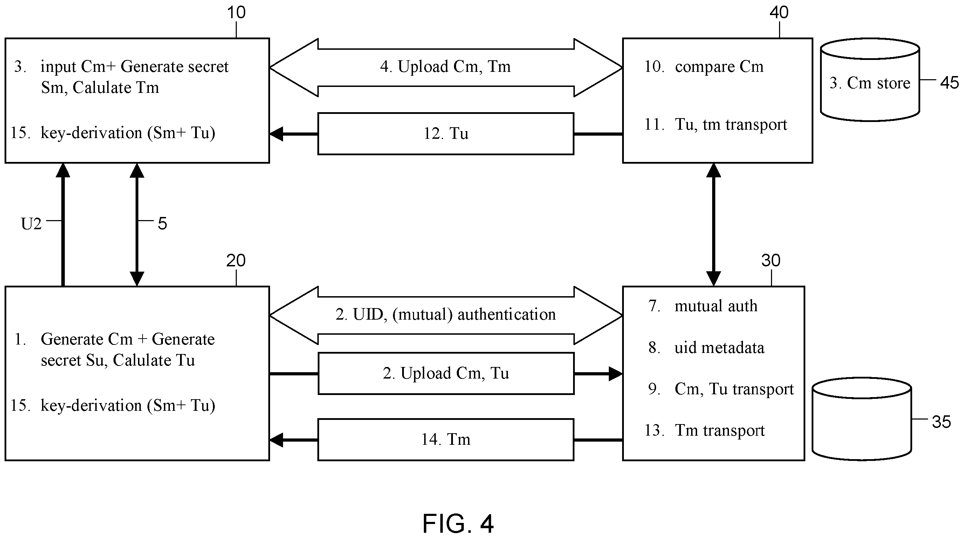

Fig. 4 shows a third process diagram according to the invention. Here, the first random number is generated by the second entity 20, also generating the second random number. The first string derived from said first random number is entered into the first entity 10 via a second manual user action U₂. The process is further similar to the second process explained referring to Fig. 3.

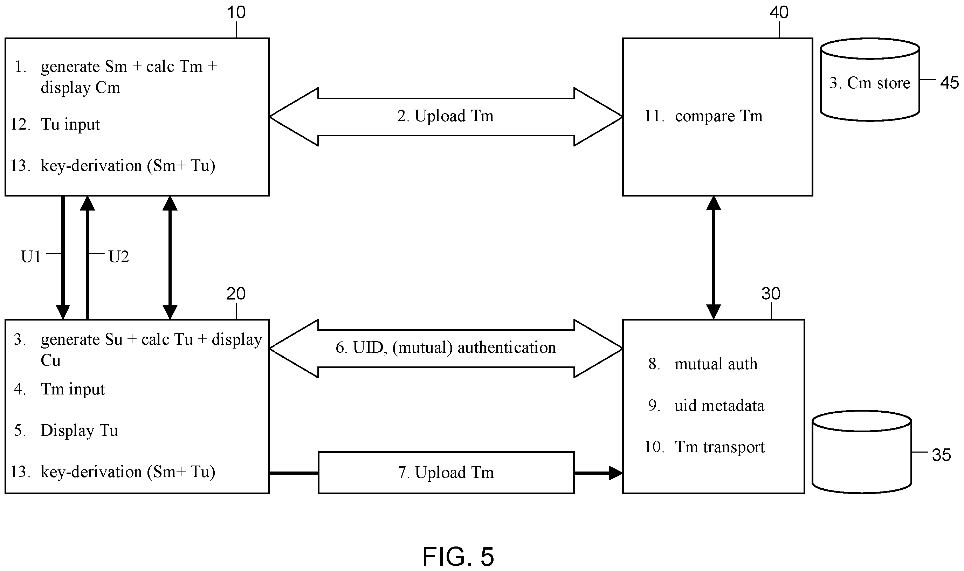

Fig. 5 shows a fourth process diagram according to the invention. Here, two strings are manually entered into the first and the second entity 10, 20. In contrast to the second process where the encrypted transformation Tᵤ is forwarded via the authentication server 30 and the intermediate node 40 to the first entity 10, the encrypted transformation Tᵤ , obtained by applying a secret key Sᵤ to the number Cₘ, or equivalent thereof, is now manually entered to the first entity 10.

In the fourth process diagram, a first random number is generated by the first entity 10. The first random number or first string is exported to the user, e.g. via a display, and entered by the user in a first manual user action Ui into the second entity 20, the user authentication device. Here, both the first entity 10 and the second entity 20 derive a secret key Sm, Su and apply the key Sm, Su to the number Cₘ, or equivalent thereof, obtaining the encoded string Tₘ, Tᵤ, encrypted transformations of the random number Cₘ or the equivalent of Cₘ. Also the encoded string Tₘ is entered by the user in the first manual user action Ui into the second entity 20. The encrypted transformation Tₘ and user identification data UID are uploaded from the second entity 20 to the authentication server 30, for mutual identification, including retrieval of information from identification metadata stored in an authentication storage unit 35 associated with the authentication server 30, and transport of relevant identification metadata and the encrypted transformation Tₘ, to the intermediate node 40. The encrypted transformation Tₘ is also uploaded from the first entity 10 to the intermediate node 40. The intermediate node 40 performs a verification of the encoded strings Cₘ received from the first and the second entity 10, 20. If the strings correspond, the intermediate node 40 authorizes the first and second entity 10, 20 to share a second random number.

The encrypted transformation Tᵤ , obtained by applying a secret key Sᵤ to the number Cₘ, or equivalent thereof, is manually entered to the first entity 10 via a second manual user action U₂. Based on the encoded strings Tₘ, Tᵤ, both the first and the second entity 10, 20 compute a key. A secure connection S is set up between the user workplace application and the user authentication device. Here, the second string is transferred via the second manual user action U₂.

It is noted that the secure session can be set up between the user authentication device and a user platform application, such as a user workplace application, a cloud application, an authentication provider or a transaction application.

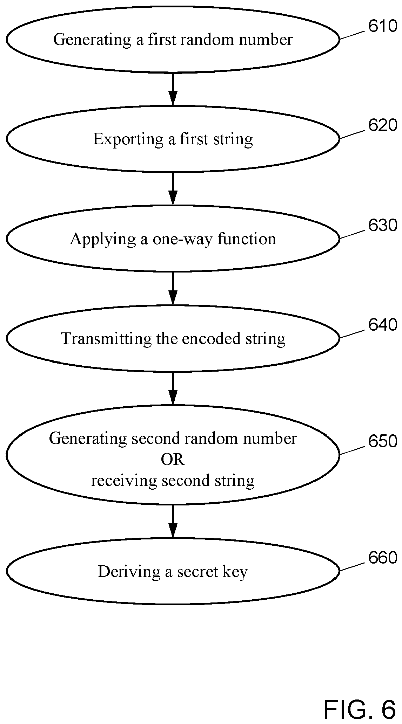

Figure 6 shows a flow chart of a method according to the invention being performed on a first entity. The method is applied for setting up a secure session between a first entity and a second entity, the first and second entity being a user authentication device and an application running on a platform, respectively, or vice versa, the method being performed by a first entity. The method comprises a step of generating 610 a first random number, a step of exporting 620 a first string derived from said first random number, to a user for entering the first string into a second entity, a step of applying 630 a one-way function to the first string or to a derivative thereof, obtaining an encoded string, a step of transmitting 640 the encoded string to an intermediate node that is in connection to the first entity and a second entity. The method further comprises the steps of generating 650 a second random number, deriving a second string from said second random number and transmitting the second string to the second entity if a verifying step of comparing encoded strings transmitted by the first entity and the second entity has a positive result, or the step of receiving from the second entity a second string being derived from a second random number generated by the second entity. Further, the method comprises the step of deriving 660 a secret key from the first and the second string.

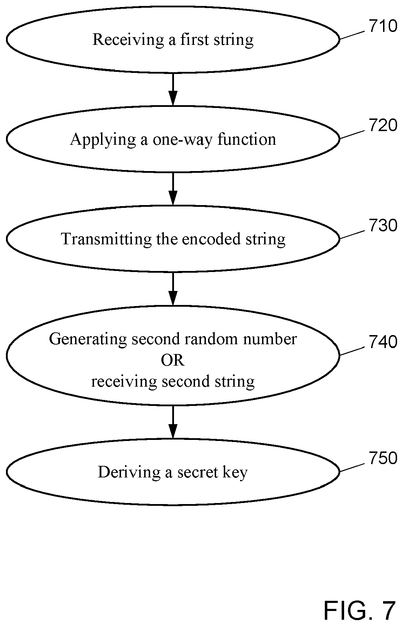

Figure 7 shows a flow chart of a method according to the invention being performed on a second entity. The method is applied for setting up a secure session between a first entity and a second entity, the first and second entity being a user authentication device and an application running on a platform, respectively, or vice versa, the method being performed by a second entity. The method comprises a step of receiving 710, via an I/O interface, a first string derived from a first random number generated by a first entity, a step of applying 720 a one-way function to the first string or to a derivative thereof, obtaining an encoded string, a step of transmitting 730 the encoded string to an intermediate node that is in connection to a first and the second entity. Further, the method comprises the steps of generating 740 a second random number, deriving a second string from said second random number and transmitting the second string to the first entity if a verifying step of comparing encoded strings transmitted by the first entity and the second entity has a positive result, or the step of receiving from the first entity a second string being derived from a second random number generated by the first entity. The method further comprises a step of deriving 750 a secret key from the first and the second string.

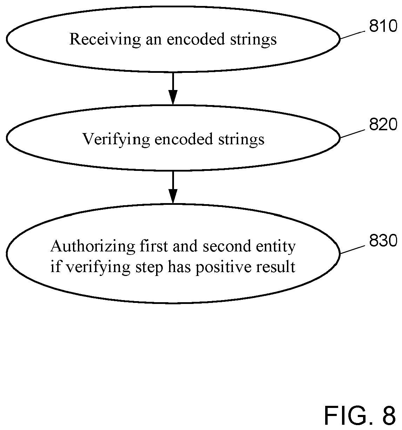

Figure 8 shows a flow chart of a method according to the invention being performed on an intermediate node that is in connection to a first entity and a second entity. The method is applied for setting up a secure session between a first entity and a second entity, the first and second entity being a user authentication device and an application running on a platform, respectively, or vice versa, the method being performed by an intermediate node. The method comprises a step of receiving 810 an encoded string from a first and second entity, the encoded string being obtained by applying a one-way function to a first string or to a derivative thereof, the first string being derived from a first random number generated by a first entity, a step of verifying 820 whether the encoded strings received from the first and second entity are the same, and a step of authorizing 830 the first and second entity to share a second string being derived from a second random number generated by the first or second entity, respectively, if the verifying step has a positive result.

The above defined methods can be performed using dedicated hardware structures, such as FPGA and/or ASIC components. Otherwise, the methods can also at least partially be performed using a computer program product comprising instructions for causing a processing unit of the first entity, the second entity and the intermediate node to perform the above described steps of the methods according to the invention. All steps of a method can in principle be performed on a single processor. However, it is noted that in advantageous embodiments according to the invention, steps are performed on separate processing units. As an example, the step of deriving a secret key can be performed on a separate processing unit.

According to an aspect a method is provided for performing an instruction on a platform application, comprising the steps of:
- preparing a persistent instruction on a user workplace application that is remotely connected to the platform application;
- forwarding the persistent instruction to the platform application;
- setting up a secure connection between the platform application and an authentication device;
- performing an authorization dialog between the transaction system application and the authentication device; and
- executing the transaction instruction only when the authorization dialog has successfully finished.

The step of setting up a secure connection between the platform application and the authentication device can be performed as described above. However, also other methods of setting up the secure connection are applicable. As an example, the platform application is a transaction system application and the instruction is a transaction instruction.

According to a further aspect, a platform application is provided that is remotely connected to a user workplace application and that has a secure connection with an authentication device, the platform application comprising a processor that is arranged for:
- receiving a persistent instruction prepared on the user workplace;
- performing an authorization dialog with the authentication device, via the secure connection; and
- executing the instruction only when the authorization dialog has successfully finished.

According to yet a further aspect, a computer program product is provided for performing an instruction on a platform application, the computer program product comprising computer readable code for facilitating a processing unit to perform the steps of:
- preparing a persistent instruction on a user workplace application that is remotely connected to the platform application;
- forwarding the persistent instruction to the platform application;
- setting up a secure connection between the platform application and an authentication device;
- performing an authorization dialog between the transaction system application and the authentication device; and
- executing the instruction only when the authorization dialog has successfully finished.

It will be understood that the above described embodiments of the invention are exemplary only and that other embodiments are possible without departing from the scope of the present invention. It will be understood that many variants are possible.

Such variants will be apparent for the person skilled in the art. The scope of the invention, however, is defined by the claims.

## Claims

1. A method for performing an instruction on a platform application, comprising the steps of:
- preparing a persistent instruction on a user workplace application (10) that is remotely connected to a platform application (20);
- forwarding the persistent instruction to the platform application (20);
- setting up a secure connection between the platform application (20) and a user authentication device;
- performing an authorization dialog between the platform application (20) and the user authentication device; and
- executing the instruction only when the authorization dialog has successfully finished.

2. A method according to claim 1, wherein the first string is first random number or a random message produced from said first random number.

3. A method according to any of the preceding claims, wherein the second string is transmitted in an encrypted manner.

4. A method according to any of the preceding claims, wherein the authorization dialog includes the steps of:
- transmitting a code, from the transaction system application to the authentication device for entering the code into the user workplace application;
- transmitting the code from the user workplace application to the transaction system application; and
- verifying whether the code received by the transaction system application is the same as the code transmitted by said transaction system application.

5. A method according to any of the preceding claims, wherein the step of transmitting the second string is implemented by exporting the second string to a user, via an I/O interface of one entity, for manually entering the second string into an I/O interface of the other entity.

6. A platform application (20) that is remotely connected to a user workplace application (10) and that has a secure connection with a user authentication device, the platform application (20) comprising a processor that is arranged for:
- receiving a persistent instruction prepared on the user workplace;
- performing an authorization dialog with the user authentication device, via the secure connection; and
- executing the instruction only when the authorization dialog has successfully finished.

7. A platform application according to claim 6 being a first entity arranged for setting up a secure session with the user authentication device being a second entity, the first entity comprising:
- a first random generator for generating a first random number;
- an I/O interface for exporting a first string derived from said first random number, to a user for entering the first string into a second entity;
- a processor for applying a one-way function to the first string or to a derivative thereof, obtaining an encoded string;
- a transmitting unit for transmitting the encoded string to an intermediate node that is in connection to the first entity and a second entity,
the first entity further comprising:
- a second random generator for generating a second random number, wherein the processor is further arranged for deriving a second string from said second random number and for transmitting the second string to the second entity if a verifying step of comparing encoded strings transmitted by the first entity and the second entity has a positive result, or
- a receiver unit for receiving from the second entity a second string being derived from a second random number generated by the second entity,
and wherein the processor is further arranged for deriving a secret key from the first and the second string.

8. A user authentication device being a second entity arranged for setting up a secure session with a platform application according to claim 6 or 7, the second entity comprising:
- an I/O interface for receiving a first string derived from a first random number generated by a first entity;
- a processor for applying a one-way function to the first string or to a derivative thereof, obtaining an encoded string;
- a transmitting unit for transmitting the encoded string to an intermediate node that is in connection to a first and the second entity;
the second entity further comprising:
- a second random generator for generating a second random number, wherein the processor is arranged for deriving a second string from said second random number and for transmitting the second string to the first entity if a verifying step of comparing encoded strings transmitted by the first entity and the second entity has a positive result, or
- a receiver unit for receiving from the first entity a second string being derived from a second random number generated by the first entity,
and wherein the processor is further arranged for deriving a secret key from the first and the second string.

9. An intermediate node that is in connection to a platform application according to claim 6 or 7, and to a user authentication device according to claim 8 for setting up a secure connection between the first and the second entity, the intermediate node preferably comprising:
- a receiving unit for receiving an encoded string from a first and second entity, the encoded string being obtained by applying a one-way function to a first string or to a derivative thereof, the first string being derived from a first random number generated by a first entity;
- a processor for verifying whether the encoded strings received from the first and second entity are the same,
wherein the processor is further arranged for authorizing the first and second entity to share a second string being derived from a second random number generated by the first or second entity, respectively, if the verifying step has a positive result.

10. A network, comprising a platform application according to claim 6 or 7, a user authentication device according to claim 8, and an intermediate node according to claim 9.

11. A computer program product for performing an instruction on a platform application, the computer program product comprising computer readable code for facilitating a processing unit to perform the steps of:
- preparing a persistent instruction on a user workplace application that is remotely connected to a platform application;
- forwarding the persistent instruction to the platform application;
- setting up a secure connection between the platform application and a user authentication device;
- performing an authorization dialog between the platform application and the user authentication device; and
- executing the instruction only when the authorization dialog has successfully finished.

## Patentansprüche

1. Verfahren zur Durchführung einer Anweisung auf einer Plattformanwendung, das die Schritte umfasst:
- Vorbereitung einer dauerhaften Anweisung auf einer Benutzerarbeitsplatzanwendung (10), die mit einer Plattformanwendung (20) fernverbunden ist;
- Weiterleitung der dauerhaften Anweisung an die Plattformanwendung (20);
- Aufbau einer sicheren Verbindung zwischen der Plattformanwendung (20) und einer Benutzerauthentifizierungsvorrichtung;
- Durchführung eines Autorisierungsdialogs zwischen der Plattformanwendung (20) und der Benutzerauthentifizierungsvorrichtung; und
- Ausführung der Anweisung erst dann, wenn der Autorisierungsdialog erfolgreich abgeschlossen wurde.

2. Verfahren nach Anspruch 1, wobei die erste Zeichenfolge eine erste Zufallszahl oder eine aus der ersten Zufallszahl erzeugte Zufallsnachricht ist.

3. Verfahren nach einem der vorhergehenden Ansprüche, wobei die zweite Zeichenfolge verschlüsselt übertragen wird.

4. Verfahren nach einem der vorhergehenden Ansprüche, wobei der Autorisierungsdialog die Schritte einschließt:
- Übertragung eines Codes von der Transaktionssystemanwendung an die Authentifizierungsvorrichtung zur Eingabe des Codes in die Benutzerarbeitsplatzanwendung;
- Übertragung des Codes von der Benutzerarbeitsplatzanwendung an die Transaktionssystemanwendung; und
- Überprüfung, ob der von der Transaktionssystemanwendung empfangene Code mit dem von der Transaktionssystemanwendung übertragenen Code übereinstimmt.

5. Verfahren nach einem der vorhergehenden Ansprüche, wobei der Schritt der Übertragung der zweiten Zeichenfolge durch Exportieren der zweiten Zeichenfolge an einen Benutzer über eine E/A-Schnittstelle einer Einheit zur manuellen Eingabe der zweiten Zeichenfolge in eine E/A-Schnittstelle der anderen Einheit implementiert wird.

6. Plattformanwendung (20), die ferngesteuert mit einer Benutzerarbeitsplatzanwendung (10) verbunden ist und eine sichere Verbindung mit einer Benutzerauthentifizierungsvorrichtung hat, wobei die Plattformanwendung (20) einen Prozessor umfasst, der ausgelegt ist für:
- das Empfangen einer dauerhaften Anweisung, die auf dem Benutzerarbeitsplatz vorbereitet wurde;
- die Durchführung eines Autorisierungsdialogs mit der Benutzerauthentifizierungsvorrichtung über die sichere Verbindung; und
- das Ausführung der Anweisung erst dann, wenn der Autorisierungsdialog erfolgreich abgeschlossen wurde.

7. Plattformanwendung nach Anspruch 6, bei der es sich um eine erste Einheit handelt, die für den Aufbau einer sicheren Sitzung mit der Benutzerauthentifizierungsvorrichtung, die eine zweite Einheit ist, ausgelegt ist, wobei die erste Einheit umfasst:
- einen ersten Zufallsgenerator zur Erzeugung einer ersten Zufallszahl;
- eine E/A-Schnittstelle zum Exportieren einer ersten Zeichenfolge, die von der ersten Zufallszahl abgeleitet ist, an einen Benutzer zur Eingabe der ersten Zeichenfolge in eine zweite Einheit;
- einen Prozessor zur Anwendung einer Einwegfunktion auf die erste Zeichenfolge oder eine Ableitung davon, um eine kodierte Zeichenfolge zu erhalten;
- eine Übertragungseinheit zur Übertragung der kodierten Zeichenfolge an einen Zwischenknoten, der mit der ersten Einheit und einer zweiten Einheit verbunden ist, wobei die erste Einheit ferner umfasst:
- einen zweiten Zufallsgenerator zum Erzeugen einer zweiten Zufallszahl, wobei der Prozessor ferner zum Ableiten einer zweiten Zeichenfolge aus der zweiten Zufallszahl und zur Übertragung der zweiten Zeichenfolge an die zweite Einheit ausgelegt ist, wenn ein Verifizierungsschritt des Vergleichens kodierter Zeichenfolgen, die von der ersten Einheit und der zweiten Einheit übertragen wurden, ein positives Ergebnis hat, oder
- eine Empfängereinheit zum Empfangen einer zweiten Zeichenfolge von der zweiten Einheit, die von einer zweiten Zufallszahl abgeleitet ist, die von der zweiten Einheit erzeugt wurde, und wobei der Prozessor ferner zum Ableiten eines geheimen Schlüssels aus der ersten und der zweiten Zeichenfolge ausgelegt ist.

8. Benutzerauthentifizierungsvorrichtung, die eine zweite Einheit ist, die zum Aufbau einer sicheren Sitzung mit einer Plattformanwendung nach Anspruch 6 oder 7 ausgelegt ist, wobei die zweite Einheit umfasst:
- eine E/A-Schnittstelle zum Empfangen einer ersten Zeichenfolge, die von einer ersten Zufallszahl abgeleitet ist, die von einer ersten Einheit erzeugt wurde;
- einen Prozessor zur Anwendung einer Einwegfunktion auf die erste Zeichenfolge oder eine Ableitung davon, um eine kodierte Zeichenfolge zu erhalten;
- eine Übertragungseinheit zur Übertragung der kodierten Zeichenfolge an einen Zwischenknoten, der mit einer ersten und der zweiten Einheit in Verbindung steht; wobei die zweite Einheit ferner umfasst:
- einen zweiten Zufallsgenerator zum Erzeugen einer zweiten Zufallszahl, wobei der Prozessor zum Ableiten einer zweiten Zeichenfolge aus der zweiten Zufallszahl und zur Übertragung der zweiten Zeichenfolge an die erste Einheit ausgelegt ist, wenn ein Verifizierungsschritt des Vergleichens kodierter Zeichenfolgen, die von der ersten Einheit und der zweiten Einheit übertragen wurden, ein positives Ergebnis hat, oder
- eine Empfängereinheit zum Empfangen einer zweiten Zeichenfolge von der ersten Einheit, die von einer zweiten Zufallszahl abgeleitet ist, die von der zweiten Einheit erzeugt wurde, und wobei der Prozessor ferner zum Ableiten eines geheimen Schlüssels aus der ersten und der zweiten Zeichenfolge ausgelegt ist.

9. Zwischenknoten, der mit einer Plattformanwendung nach Anspruch 6 oder 7 und mit einer Benutzerauthentifizierungsvorrichtung nach Anspruch 8 in Verbindung steht, um eine sichere Verbindung zwischen der ersten und der zweiten Einheit aufzubauen, wobei der Zwischenknoten vorzugsweise umfasst:
- eine Empfangseinheit zum Empfangen einer kodierten Zeichenfolge von einer ersten und einer zweiten Einheit, wobei die kodierte Zeichenfolge durch Anwendung einer Einwegfunktion auf eine erste Zeichenfolge oder auf eine Ableitung davon erhalten wird, wobei die erste Zeichenfolge von einer ersten Zufallszahl abgeleitet wird, die von einer ersten Einheit erzeugt wird;
- einen Prozessor, der überprüft, ob die von der ersten und der zweiten Einheit empfangenen kodierten Zeichenfolgen übereinstimmen, wobei der Prozessor ferner so ausgelegt ist, dass er die erste und die zweite Einheit autorisiert, eine zweite Zeichenfolge gemeinsam zu nutzen, die von einer zweiten Zufallszahl abgeleitet ist, die von der ersten oder zweiten Einheit erzeugt wurde, wenn der Verifizierungsschritt ein positives Ergebnis hat.

10. Netz, das eine Plattformanwendung nach Anspruch 6 oder 7, eine Benutzerauthentifizierungsvorrichtung nach Anspruch 8 und einen Zwischenknoten nach Anspruch 9 umfasst.

11. Computerprogrammprodukt zur Durchführung einer Anweisung auf einer Plattformanwendung, wobei das Computerprogrammprodukt einen computerlesbaren Code umfasst, der es einer Verarbeitungseinheit ermöglicht, die folgenden Schritte durchzuführen:
- Vorbereitung einer dauerhaften Anweisung auf einer BenutzerArbeitsplatzanwendung, die mit einer Plattformanwendung fernverbunden ist;
- Weiterleitung der dauerhaften Anweisung an die Plattformanwendung;
- Aufbau einer sicheren Verbindung zwischen der Plattformanwendung und einer Benutzerauthentifizierungsvorrichtung;
- Durchführung eines Autorisierungsdialogs zwischen der Plattformanwendung und der Benutzerauthentifizierungsvorrichtung; und
- Ausführung der Anweisung erst dann, wenn der Autorisierungsdialog erfolgreich abgeschlossen wurde.

## Revendications

1. Procédé pour exécuter une instruction sur une application de plate-forme, comprenant les étapes de :
préparer une instruction persistante sur une application de poste de travail d'utilisateur (10) qui est connectée à distance à une application de plate-forme (20) :
envoyer l'instruction persistante à l'application de plate-forme (20) ;
établir une connexion sécurisée entre l'application de plate-forme (20) et un dispositif d'authentification d'utilisateur ;
réaliser un dialogue d'autorisation entre l'application de plate-forme (20) et le dispositif d'authentification d'utilisateur ; et
exécuter l'instruction seulement quand le dialogue d'autorisation s'est achevé avec succès.

2. Procédé selon la revendication 1, dans lequel la première chaîne est un premier nombre aléatoire ou un message aléatoire produit à partir dudit premier nombre aléatoire.

3. Procédé selon l'une quelconque des revendications précédentes, dans lequel la seconde chaîne est transmise d'une manière cryptée.

4. Procédé selon l'une quelconque des revendications précédentes, dans lequel le dialogue d'autorisation inclut les étapes de :
transmettre un code, depuis l'application de système de transaction vers le dispositif d'authentification pour entrer le code dans l'application de poste de travail d'utilisateur;
transmettre le code depuis l'application de poste de travail d'utilisateur vers application de système de transaction ; et
vérifier si le code reçu par l'application de système de transaction est le même que le code transmis par ladite application de système de transaction.

5. Procédé selon l'une quelconque des revendications précédentes, dans lequel l'étape de transmission de la seconde chaîne est implémentée en exportant la seconde chaîne vers un utilisateur, via une interface I/O d'une entité, pour entrer manuellement la seconde chaîne dans une interface I/O de l'autre entité.

6. Application de plate-forme (20) qui est connectée à distance à une application de poste de travail d'utilisateur (10) et qui a une connexion sécurisée avec un dispositif d'authentification d'utilisateur, l'application de plate-forme (20) comprenant un processeur qui est agencé pour :
recevoir une instruction persistante préparée sur le poste de travail d'utilisateur ;
réaliser un dialogue d'autorisation avec le dispositif d'authentification d'utilisateur via la connexion sécurisée ; et
exécuter l'instruction seulement quand le dialogue d'autorisation s'est terminé avec succès.

7. Application de plate-forme selon la revendication 6 étant une première entité agencée pour établir une session sécurisée avec le dispositif d'authentification d'utilisateur étant une seconde entité, la première entité comprenant :
un premier générateur aléatoire pour générer un premier nombre aléatoire ;
une interface I/O pour exporter une première chaîne dérivée dudit premier nombre aléatoire, vers un utilisateur pour entrer la première chaîne dans une seconde entité ;
un processeur pour appliquer une fonction unidirectionnelle à la première chaîne ou à une dérivée de celle-ci, pour obtenir une chaîne codée ;
une unité de transmission pour transmettre la chaîne codée à un nœud intermédiaire qui est en connexion avec la première entité et une seconde entité, la première entité comprenant en outre :
un second générateur aléatoire pour générer un second nombre aléatoire, dans lequel le processeur est en outre agencé pour dériver une seconde chaîne dudit second nombre aléatoire et pour transmettre la seconde chaîne à la seconde entité si une étape de vérification de comparaison des chaînes codées transmises par la première entité et la seconde entité a un résultat positif, ou
une unité de récepteur pour recevoir depuis la seconde entité une seconde chaîne étant dérivée d'un second nombre aléatoire généré par la seconde entité, et dans lequel le processeur est en outre agencé pour dériver une clé secrète de la première et la seconde chaîne.

8. Dispositif d'authentification d'utilisateur étant une seconde entité agencée pour établir une session sécurisée avec une application de plate-forme selon la revendication 6 ou 7, la seconde entité comprenant :
une interface I/O pour recevoir une première chaîne dérivée d'un premier nombre aléatoire généré par une première entité ;
un processeur pour appliquer une fonction unidirectionnelle à la première chaîne ou à une dérivée de celle-ci, pour obtenir une chaîne codée ;
une unité de transmission pour transmettre la chaîne codée à un nœud intermédiaire qui est en connexion avec une première et la seconde entité ;
la seconde entité comprenant en outre :
un second générateur aléatoire pour générer un second nombre aléatoire, dans lequel le processeur est agencé pour dériver une seconde chaîne dudit second nombre aléatoire et pour transmettre la seconde chaîne à la première entité si une étape de vérification de comparaison des chaînes codées transmises par la première entité et la seconde entité a un résultat positif, ou
une unité de récepteur pour recevoir depuis la première entité une seconde chaîne étant dérivée d'un second nombre aléatoire généré par la première entité, et dans lequel le processeur est en outre agencé pour dériver une clé secrète de la première et la seconde chaîne.

9. Nœud intermédiaire qui est en connexion avec une application de plate-forme selon la revendication 6 ou 7, et avec un dispositif d'authentification d'utilisateur selon la revendication 8 pour établir une connexion sécurisée entre la première et la seconde entité, le nœud intermédiaire comprenant de préférence :
une unité de récepteur pour recevoir une chaîne codée depuis une première et une seconde entité, la chaîne codée étant obtenue en appliquant une fonction unidirectionnelle à une première chaîne ou à une dérivée de celle-ci, la première chaîne étant dérivée d'une premier nombre aléatoire généré par une première entité ;
un processeur pour vérifier si les chaînes codées reçues depuis la première et la seconde entité sont les mêmes,
dans lequel le processeur est en outre agencé pour autoriser la première et la seconde entité à partager une seconde chaîne étant dérivée d'une second nombre aléatoire généré par la première ou la seconde entité, respectivement, si l'étape de vérification a un résultat positif.

10. Réseau, comprenant une application de plate-forme selon la revendication 6 ou 7, un dispositif d'authentification d'utilisateur selon la revendication 8 et un nœud intermédiaire selon la revendication 9.

11. Produit de programme informatique pour exécuter une instruction sur une application de plate-forme, le produit de programme informatique comprenant un code lisible informatiquement pour faciliter la réalisation par une unité de traitement des étapes de :
préparation d'une instruction persistante sur une application de poste de travail d'utilisateur qui est connectée de manière distante à une application de plate-forme ;
envoi de l'instruction persistante à l'application de plate-forme ;
établissement d'une connexion sécurisée entre l'application de plate-forme et un dispositif d'authentification d'utilisateur ;
réalisation d'un dialogue d'autorisation entre l'application de plate-forme et le dispositif d'authentification d'utilisateur ; et
exécution de l'instruction seulement quand le dialogue d'autorisation s'est terminé avec succès.
